# FASCICULE DE BREVET EUROPEEN

(11) **EP 1 920 576 B1**
(45) Date de publication et mention de la délivrance du brevet: **19.12.2012**
(21) Numéro de dépôt: 06764261.1
(22) Date de dépôt: 28.07.2006
(51) Int. Cl.: H04L 29/06, H04N 21/64

(54) **PROCEDE D'ADRESSAGE POUR LE TRANSPORT DE DONNEES SUR UN RESEAU DE TELECOMMUNICATION, PASSERELLE ET PROGRAMME D'ORDINATEUR CORRESPONDANTS**
ADRESSIERUNGSVERFAHREN FÜR DEN TRANSPORT VON DATEN IN EINEM TELEKOMMUNIKATIONSNETZ, ENTSPRECHENDE GATEWAY UND COMPUTERPROGRAMM
ADDRESSING METHOD FOR TRANSPORTING DATA ON A TELECOMMUNICATION NETWORK, CORRESPONDING GATEWAY AND COMPUTER PROGRAMME

(30) Priorité: 30.08.2005 FR 0508885
(43) Date de publication de la demande: 14.05.2008
(73) Titulaire: France Télécom, 75015 Paris (FR)
(72) Inventeur: ROY, David, F-35500 Cornille (FR); BONIZEC, Gilbert, F-35480 Saint Malo De Phily (FR); GESLIN, Franck, F-35000 Rennes (FR)
(74) Mandataire: Bioret, Ludovic
(86) Numéro de dépôt international: PCT/EP2006/064803
(87) Numéro de publication internationale: WO 2007/025818

(56) Documents cités:
- WO-A-2004/002146
- US-A1- 2003 198 223
- ONDEMS: "ONDEMS MEDIA GATEWAY USER MANUAL Version 1.2.1" ONDEMS MEDIA GATEWAY, [Online] 2 mars 2005 (2005-03-02), XP002377642 Extrait de l'Internet: URL:http://www.dektec.com/Products/DTX-440 /Downloads/DTX-440.pdf> [extrait le 2006-04-20]

## Description

### 1. Domaine de l'invention

Le domaine de l'invention est celui de l'adressage des datagrammes au sein de la couche réseau d'un réseau de communication, par exemple basé sur le protocole IP (pour « Internet Protocol »). Plus précisément, l'invention concerne l'adressage multidiffusion (multicast) des datagrammes lors d'une encapsulation des données issues des services de diffusion numérique, par exemple « DVB », pour « Digital Video Broadcasting ».

Les services de diffusion numérique, par exemple « DVB », sont principalement diffusés sur des réseaux à large diffusion dit « Broadcast » en référence à un émetteur unique pour plusieurs récepteurs potentiels. Ces mêmes services sont, dans une moindre mesure et depuis peu de temps, diffusés sur les réseaux maillés basés sur le protocole IP, par exemple Internet. Cette diffusion est réalisée à l'aide du système d'adressage multidiffusion (multicast) défini par le protocole IP.

### 2. Solutions de l'art antérieur

### 2.1 Art antérieur

La diffusion des programmes et des services de télévision numérique a été en grande partie définie par le consortium « DVB ». Elle est architecturée autour de plusieurs normes liées à la diffusion des flux d'information. Ainsi, les services « DVB » (Programmes TV, radios, sélecteurs de chaînes) sont transportés sous forme de multiplexes dans les réseaux de diffusion traditionnels tels que les réseaux satellites ou les réseaux hertziens. Ces multiplexes sont constitués par des opérateurs de multiplexes. Chaque multiplexe est référencé, lors de sa fabrication, par l'identifiant unique de l'opérateur de multiplexes nommé ORIGINAL_NETWORK_ID (ou ONiD, pour « Identifiant du réseau d'origine ») ainsi que par un identifiant de multiplexe nommé TRANSPORT_STREAM_ID (ou TSiD pour « Identifiant de flux de transport »). Ce couple {ONiD; TSiD} représente l'adresse unique d'un multiplex. Au sein d'un multiplex, on alloue un identifiant pour chaque service DVB nommé SERVICE_ID (ou SiD pour « Identifiant de Service »). Le triplet {ONiD; TSiD; SiD} représente l'adresse unique d'un service DVB, par exemple une chaîne de télévision. Cette adresse est utilisée par le terminal de l'utilisateur (décodeur numérique) pour identifier, décoder et présenter le programme télévisuel ou la radio sélectionné auparavant par l'utilisateur.

Les services de multidiffusion dans les réseaux de communication basés sur le protocole IP sont quant à eux définis par le principe de l'adressage « multicast ». Cet adressage est effectué sur une plage d'adressage réservée à la multidiffusion. L'adressage « Multicast » permet de diffuser sur une architecture IP une même information vers un groupe de clients. Chaque paquet d'information (datagramme) du protocole IP contient une adresse source et une adresse dite « multicast » unique de destination. Un utilisateur fait 1a demande d'un contenu multicast, identifié par une adresse IP multicast, au moyen du protocole IGMP (Internet Group Management Protocol pour « protocole de gestion du groupe internet ») sur les réseaux qui implémentent la version 4 du protocole IP (IPv4) ou au moyen du protocole MLD (Multicast Listener Discovery pour « découverte des auditeurs de multidiffusion ») sur les réseaux qui implémentent la version 6 du protocole IP (IPv6). Ainsi, lorsqu'un utilisateur se connecte, par le biais d'une connexion Internet, à un service de diffusion d'information, l'application chargée d'identifier, de décoder et de présenter le service en question va récupérer les datagrammes dont l'adresse de destination est celle du service de diffusion de l'information.

Le consortium « DVB » a spécifié les mécanismes de transport et de signalisation des services « DVB » sur IP. Cette spécification « DVB-IP » a été normalisée à l'ETSI (« European Telecommunication Standardization Institute » pour « institut européen de standardisation des télécommunications »). Ces services sont ainsi encapsulés dans les datagrammes IP. « DVB » a également définit un mécanisme de découverte et de sélection de service. Ce mécanisme nommé SD&S (« Service Discovery and Selection » pour « Service de découverte et de sélection ») fournit, sous forme de méta données, une table de translation d'adresse entre les mondes « DVB » et « IP ». Ces méta données fournissent pour chaque service « DVB » le couple {adresse « DVB » ; Adresse IP multicast associée}. Les adresses IP multicast sont définies par les opérateurs contrôlant les passerelles entre le monde « DVB » et le monde « IP ».

Le document « ONDEMS : ONDEMS MEDIA GATEWAY USER MANUAL Version 1.2.1 », mars 2005, (IP002377642) décrit est un manuel d'utilisation d'une solution technique de la société ONDEMS permettant d'interconnecter des réseaux de diffusion de programmes de télévision numérique hétérogènes.

La première partie de ce document présente la solution logicielle permettant de réaliser l'interconnexion de réseau DVB et IP multicast à l'aide d'un fichier de configuration de translation d'adresses préalablement renseigné.

Le procédé utilisé dans ce document est ainsi basé sur l'utilisation d'un fichier de configuration paramétré par un utilisateur du système. Ce type de mécanisme est la manière classique de procéder à la diffusion de programmes DVB dans des réseaux de type IP.

### 2.2 Inconvénients de l'art antérieur

Un inconvénient de cette technique de l'art antérieur est lié au passage du monde DVB au monde IP. En effet, seul les opérateurs sont à même de définir les couples {adresse DVB ; Adresse IP multicast associée} pour l'identification des services. L'allocation des couples d'adressage sans concertation entre les opérateurs ne permet pas d'assurer l'unicité des couples {adresse DVB ; Adresse IP multicast associée}.

Un inconvénient corollaire de cette technique est que les réseaux de diffusion actuels des opérateurs sont complètement fermés. En effet, l'opérateur définissant son propre plan d'adressage, ce dernier n'est donc connu que de l'opérateur en question. Ce cloisonnement limite donc les possibilités de fournitures de nouveaux services. Pour ajouter un nouveau service, un fournisseur indépendant a deux possibilités :
- Obtenir une adresse « multicast » auprès d'un opérateur ;
- Se passer des opérateurs et utiliser une adresse « multicast » quelconque, au risque que ce soit une adresse déjà utilisée par un opérateur.

Encore un autre inconvénient de cette technique de l'art antérieur est que l'unicité d'un service DVB, identifié par son adresse DVB, n'est plus assurée lors de l'encapsulation du flux d'information en IP. En effet, une même adresse IP attribuée à un service DVB peut être réutilisée par un autre opérateur, par un autre service, ou encore par des passerelles domestiques qui peuvent proposer aussi la distribution de signaux DVB sur IP (en local sur le réseau privé d'un utilisateur, par exemple) et induire des problèmes de recouvrement d'adresses. L'altération de cette unicité induit de plus une perte, au niveau de la couche de transport du réseau IP, de l'information sur le multiplexe DVB d'origine (à savoir le triplet {ONiD; TSiD; SiD}).

Un autre inconvénient de cette technique de l'art antérieur est que l'ajout d'un nouveau service de diffusion dans le monde IP nécessite obligatoirement la création d'un couple {adresse DVB ; Adresse IP multicast associée} par l'opérateur avant que ce service ne puisse être diffusé sur le réseau IP. Cette solution statique n'est pas envisageable à grande échelle de diffusion.

### 3. Objectifs de l'invention

L'invention a notamment pour objectif de pallier ces inconvénients de l'art antérieur.

Plus précisément, un objectif de l'invention est de fournir une technique qui assure un partage de l'espace d'adressage « multicast » en fonction des adresses DVB d'origine.

Un autre objectif de l'invention est de permettre le décloisonnement des réseaux de diffusion des opérateurs.

L'invention a encore pour objectif d'assurer l'unicité des services DVB retransmis sur le réseau de communication en éliminant les problèmes de recouvrement d'adresse et en éliminant la perte de l'adresse du service DVB à l'origine de la diffusion sur le réseau de communication.

L'invention a enfin pour objectif de fournir une telle technique qui limite les interventions des opérateurs lors de l'ajout de nouveaux services de diffusion en provenance des réseaux DVB.

### 4. Résumé de l'invention

Ces objectifs, ainsi que d'autres qui apparaîtront par la suite, sont atteints à l'aide d'un procédé de transformation d'une première adresse de niveau transport en une seconde adresse de niveau transport :
- ladite première adresse représentant au moins un service de diffusion de données numériques en provenance d'au moins un réseau de diffusion non maillé et comprenant des données identifiant ledit au moins un service de diffusion de données numériques ;
- ladite seconde adresse comprenant un champ source et/ou un champ destination et utilisée dans des datagrammes à destination d'au moins un réseau de communication.

Selon l'invention, un tel procédé comprend les étapes suivantes :
- récupération des données identifiant ledit au moins un service de diffusion de données numériques ;
- insertion d'au moins une partie des données identifiantes dans ladite seconde adresse des datagrammes.

Ainsi, l'invention repose sur une approche inventive de la création d'adresse de diffusion dans des réseaux de communication selon laquelle les données identifiant ladite première adresse sont utilisées pour créer ladite seconde adresse.

En d'autres termes, l'invention repose sur une approche dynamique de la création d'adresses de diffusion en tenant compte des informations présentes dans ladite première adresse. Cela signifie que deux services de diffusion différents n'auront jamais la même adresse de diffusion.

Avantageusement, ledit réseau de télécommunication vers lequel s'effectue la transformation est un réseau basé sur le protocole IP.

Ce type de réseau maillé définit des adresses de destination dites « multicast » qui permettent de diffuser de l'information sous forme de données numérisées à plusieurs destinataires tout en n'utilisant qu'une seule en même adresse. Il n'est donc pas nécessaire, avec ce type de réseau de s'adresser spécifiquement à un destinataire en particulier.

De manière préférentielle, lesdites données identifiantes permettant de réaliser ladite transformation appartiennent au groupe comprenant au moins :
- un identifiant dudit réseau de diffusion d'origine ;
- un identifiant de flux de transport ;
- un identifiant dudit au moins un service de diffusion de données numériques.

Ces données permettent ainsi d'identifier avec l'assurance de l'unicité la provenance des données numériques à diffuser sur le réseau de destination.

Avantageusement, ladite insertion desdites données identifiantes est mise en oeuvre dans au moins un desdits champs composant ladite seconde adresse de niveau transport.

Ainsi, l'unicité de ladite première adresse est conservée dans ladite seconde adresse. Cette seconde adresse conserve donc toutes les caractéristiques de la première.

De manière préférentielle :
- ledit au moins un réseau de diffusion non maillé véhicule des données de type « DVB » ;
- ledit identifiant dudit réseau de diffusion d'origine est le champ « ONiD » d'un multiplexe « DVB » ;
- ledit identifiant de flux de transport est le champ « TSiD » dudit multiplexe « DVB » ;
- ledit identifiant dudit au moins un service de diffusion de données numériques est le champ « SiD » d'un service de diffusion numérique dudit multiplexe « DVB ».

Dans ce cadre de transformation d'une adresse de type « DVB » en une adresse de type IP, les champs sources de l'adresse « DVB » permettent d'assurer 1a distribution de services vidéonumériques à un ensemble de destinataires. La combinaison des champs {« ONiD », « TSiD »} identifie un multiplexe de services. L'ajout du champ « SiD » à ce doublet permet d'identifier un unique service au sein du multiplexe.

De manière préférentielle, lorsque ladite seconde adresse est de type IPv4, ladite insertion desdites données identifiantes est accomplie comme suit :
- les deux octets de poids faible dudit champs source prennent la valeur dudit identifiant du réseau d'origine « ONiD » **;**
- le premier octet dudit champs destination prend une valeur constante et caractéristique de l'émission des services de diffusion numérique « DVB » ;
- les seconds et troisièmes octets dudit champs destination prennent la valeur dudit identifiant de flux de transport « TSiD » ;
- le quatrième octet dudit champs destination prend une valeur représentative dudit identifiant de service.

On construit ainsi une adresse dite « multicast » en se servant des données en provenance du multiplexe « DVB ». L'adresse IPv4 construite est composée de deux champs : source et destination. Le champ source identifie la provenance des données. A ce titre, l'insertion dans ce champ de la valeur de « ONiD » permet d'identifier le réseau à l'origine de l'émission du multiplexe. Les octets qui sont laissés libres peuvent servir à l'identification de la passerelle chargée de ladite transformation, par exemple.

Le champ destination identifie les récepteurs des données transportées. La fixation d'une valeur caractéristique au premier octet de ce champ permet de réserver une plage d'adresse à l'usage de la diffusion des services vidéonumériques sur IP. Les deuxièmes et troisièmes octets assurent l'unicité de provenance du multiplexe grâce à la valeur « TSiD » et à la valeur « ONiD » contenue dans le champ source. Enfin, le quatrième octet permet d'identifier un service en particulier.

Avantageusement, ladite valeur représentative dudit identifiant de service est déterminée de la manière suivante :
- [11111110] dans le cas d'une distribution de l'ensemble desdits au moins un service de diffusion numérique « DVB » ;
- une valeur binaire issue d'une renumérotation dudit identifiant du service « SiD » sur 8 bits et comprise entre [00000000] et [11111101] dans le cas d'une distribution d'un seul desdits au moins un service de diffusion numérique « DVB ».

Il est ainsi possible, d'adresser soit le contenu complet d'un multiplexe, soit un service spécifique de ce dernier en pratiquant une renumérotation des services adaptée à la taille des champs des adresses IPv4.

De manière préférentielle ladite renumérotation dudit identifiant du service « SiD » sur 8 bits comprend les étapes suivantes :
- comptage d'un ensemble desdits au moins un service de diffusion numérique « DVB » identifiés par ledit identifiant du réseau d'origine « ONiD » et ledit identifiant de flux de transport « TSiD » ;
- allocation d'une valeur binaire croissante à chaque élément dudit ensemble.

De manière préférentielle, lorsque ladite seconde adresse est de type IPv6, ladite insertion desdites données identifiantes est accomplie comme suit :
- les deux octets de poids faible dudit champs source prennent la valeur dudit identifiant du réseau d'origine « ONiD » ;
- le troisième octet dudit champs destination prend une valeur constante et caractéristique de l'émission des services de diffusion numérique « DVB » ;
- les treizième et quatorzième octets dudit champs destination prennent la valeur dudit identifiant de flux de transport « TSiD » ;
- les quinzième et seizième octets dudit champs destination prennent une valeur représentative dudit identifiant de service.

On construit ainsi une adresse dite « multicast » en se servant des données en provenance du multiplexe « DVB ». L'adresse IPv6 construite est composée de deux champs : source et destination. Le champ source identifie la provenance des données. A ce titre, l'insertion dans ce champ de la valeur de « ONiD » permet d'identifier le réseau à l'origine de l'émission du multiplexe. Les octets qui sont laissés libres peuvent servir à l'identification de la passerelle chargée de ladite transformation, par exemple.

Le champ destination identifie les récepteurs des données transportées. Les deux premiers octets, selon la norme IPv6 sont réservés lors de l'usage d'une adresse IP de type « multicast ». La fixation d'une valeur caractéristique au troisième octet de ce champ permet de réserver une plage d'adresses à l'usage de la diffusion des services de diffusion numérique sur IP. Les treizième et quatorzième octets assurent l'unicité de provenance du multiplexe grâce à la valeur « TSiD » et à la valeur « ONiD » contenue dans le champ source. Enfin, les quinzième et seizième octets permettent d'identifier un service en particulier.

Avantageusement ladite valeur représentative dudit identifiant de service est déterminée de la manière suivante :
- [11111111][11111101] dans le cas d'une distribution de l'ensemble desdits au moins un service de diffusion numérique « DVB » ;
- la valeur dudit identifiant du service « SiD » dans le cas d'une distribution d'un seul desdits au moins un service de diffusion numérique « DVB ».

Il est ainsi possible, d'adresser soit le contenu complet d'un multiplexe, soit un service spécifique de ce dernier en insérant la valeur du « SiD ».

L'invention concerne également la structure du signal représentatif d'une telle seconde adresse de niveau transport, comprenant au moins un champ comprenant au moins une desdites données identifiant ledit au moins un service de diffusion de données numériques.

Dans au moins un mode de réalisation, un tel signal est obtenu par :
- récupération desdites données identifiant ledit au moins un service de diffusion de données numériques ;
- insertion d'au moins une partie desdites données identifiantes dans ladite seconde adresse desdits datagrammes.

Dans au moins un mode de réalisation, l'invention concerne encore les passerelles mettant en oeuvre le procédé décrit ci-dessus, les signaux d'adresses ainsi construites, ainsi que les programmes informatiques correspondants.

Ainsi, une telle passerelle peut par exemple comprendre des moyens de transformation d'adresses de services issus de multiplexes « DVB » en des adresses « multicast » utilisées dans les protocoles IP en version 4 et/ou 6.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente le principe général de calcul d'adresse pour le passage du flux d'information du réseau de diffusion DVB vers le réseau IP ;
- la figure 2 illustre le format d'un datagramme IPv4 et le remplissage de ses champs d'entête en appliquant le procédé de génération dans le cas de la diffusion d'un seul service ;
- la figure 3 décrit le processus de production de l'adresse IPv4 dans le cas de la diffusion de l'ensemble d'un multiplexe ;
- la figure 4 illustre le format d'un datagramme IPv6 et le remplissage de ses champs d'entête en appliquant le procédé de génération dans le cas de la diffusion d'un seul service ;
- la figure 5 décrit le processus de production de l'adresse IPv6 dans le cas de la diffusion de l'ensemble d'un multiplexe ;
- la figure 6 illustre, de façon schématique, la structure matérielle de la passerelle de la figure 1.

### 6. Description détaillée de l'invention

### 6.1 Rappel du principe de l'invention

Dans le cadre de la présente invention, on s'intéresse donc à la création d'une adresse de diffusion générale sur un réseau de communication, à partir des éléments qui identifient et constituent une adresse source d'un réseau de communication non maillé. Cette création d'adresse permet de gérer efficacement le passage de données numériques d'un réseau à l'autre en disposant d'un procédé global de translation. On peut ainsi proposer une technique permettant de faire transiter des données entre un réseau de diffusion de services vidéonumériques et un réseau de communication de type UMTS à destination des terminaux de communication mobiles.

Dans un mode de réalisation particulier de l'invention, on s'intéresse donc à la création d'une adresse de diffusion « multicast » unique en fonction notamment des services de diffusion « DVB » d'origine et/ou du protocole de transport utilisé pour l'acheminement du service d'origine.

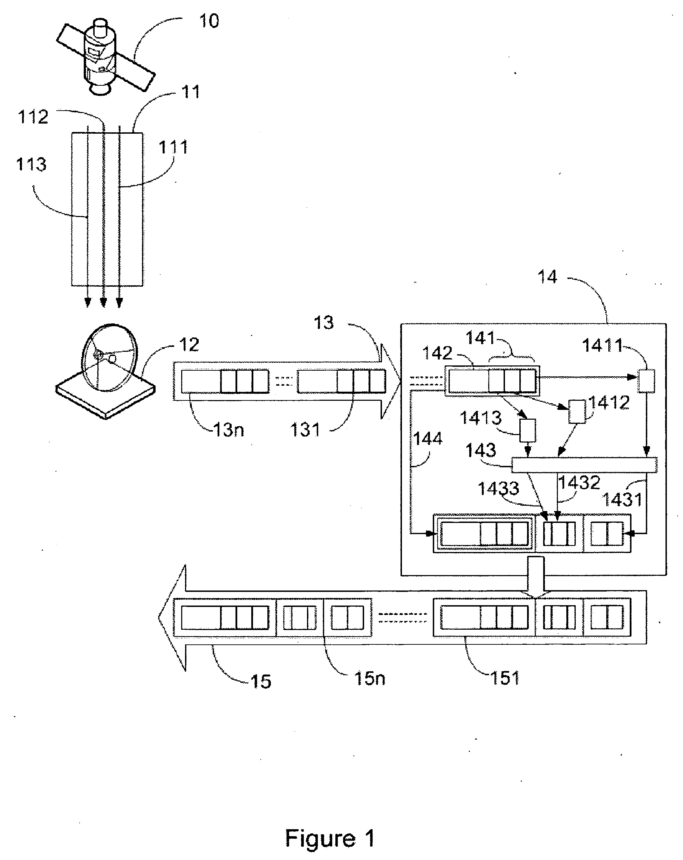

Le principe général de l'invention repose sur l'intégration des données composantes de l'adresse d'origine du service « DVB » dans les champs d'adressage du datagramme du protocole de destination à l'aide d'une passerelle. Ce principe est décrit en figure 1.

Une passerelle 14 reçoit (13), par le biais d'un moyen de réception approprié 12 (antenne satellite, récepteur numérique terrestre) un multiplexe « DVB » 11 en provenance d'un moyen de diffusion ad hoc 10 (satelitte, antenne hertzienne). Ce multiplexe 11 est identifié par le couple {« ONiD », « TSiD »}. Il contient un ensemble de services 111, 112 et 113 identifiés par leurs « SiD ». Ces services sont transmis à la passerelle 14 sous la forme de paquets de données (131,...13n). La passerelle réceptionne ces paquets de données. Ils comprennent une adresse 141 et des données 142. Cette adresse comprend le triplet {ONiD, 1411; TSiD, 1412; SiD, 1413} identifiant le service du multiplexe.

Dans ce mode de réalisation, chaque élément (1411, 1412, 1413) composant le triplet {ONiD; TSiD; SiD} de l'adresse de diffusion « DVB » d'origine est composé de 16 bits (2 octets). L'adresse d'origine présente donc une longueur de 48 bits (6 Octets au total). Il est toutefois envisageable que les longueurs d'adressage des champs d'origine soient différentes.

Lors de la distribution sur IP d'un service « DVB » en provenance d'un réseau diffusé, la passerelle :
- identifie le service « DVB » source au moins du triplet composant son adresse source ;
- crée (143) un couple d'adresse IP pour le service « DVB » en :
   - insérant (1431, 1432, 1433) ses adresses dans le datagramme IP ;
- encapsule (144) le paquet DVB dans le datagramme IP ;
- émet (15) le datagramme (151) sur le réseau à la suite des autres (15n).

Le couple d'adresse inséré dans le datagramme est composé des éléments suivants :
- un champ IP source égal au moins au champ « ONiD » 1411 en provenance de l'opérateur du Multiplexe ;
- un champ IP destination (« multicast ») composée :
   - au moins du champ TSiD 1412 (pour « Transport Stream ID ») ;
   - optionnellement du champ SiD 1413 (pour « Service ID »).

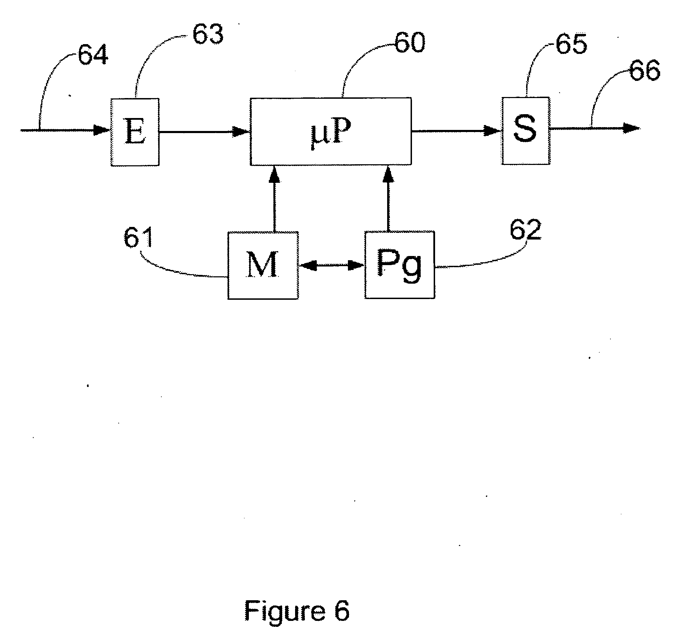

La structure de la passerelle est illustrée schématiquement par la figure 6. Il comprend également une mémoire M 61, et une unité de traitement 60 équipée d'un microprocesseur µP, qui est piloté par un programme d'ordinateur (ou application) Pg 62. L'unité de traitement 60 reçoit en entrée, via un module d'interface d'entrée réseau E 63, des requêtes et/ou des réponses clients 64, que le microprocesseur µP traite, selon les instructions du programme Pg 62, pour générer des commandes et/ou des réponses 66, qui sont transmises via un module d'interface de sortie réseau S 65.

Par la suite, on présente notamment le cas de l'implémentation de ce procédé dans le cadre du protocole IPv4 et du protocole IPv6. Il est clair cependant que l'invention ne se limite pas à cette application particulière, mais peut également être mise en oeuvre dans de nombreux autres domaines, et par exemple dans le domaine de la diffusion des services DVB pour les terminaux de communications mobiles de type UMTS et GPRS et plus généralement dans tous les cas où les objectifs listés dans le document sont intéressants.

### 6.2 Description d'un mode de réalisation avec le protocole IPv4

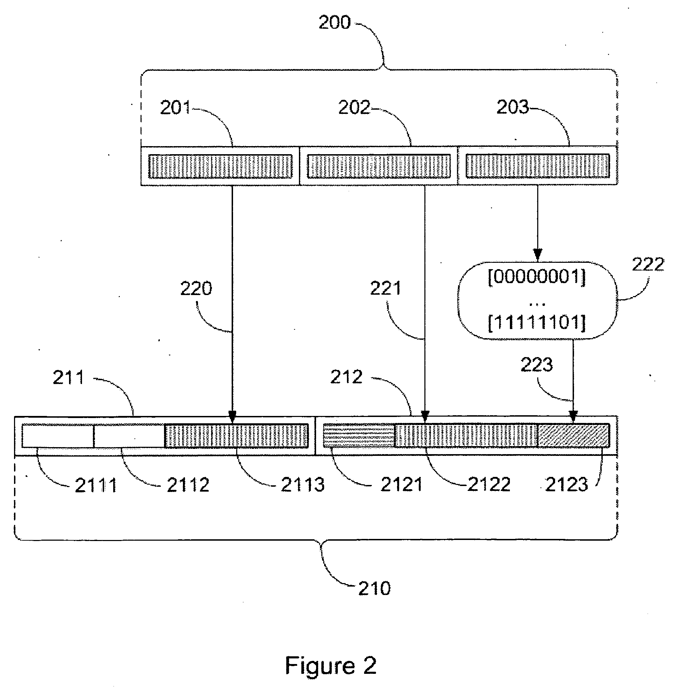

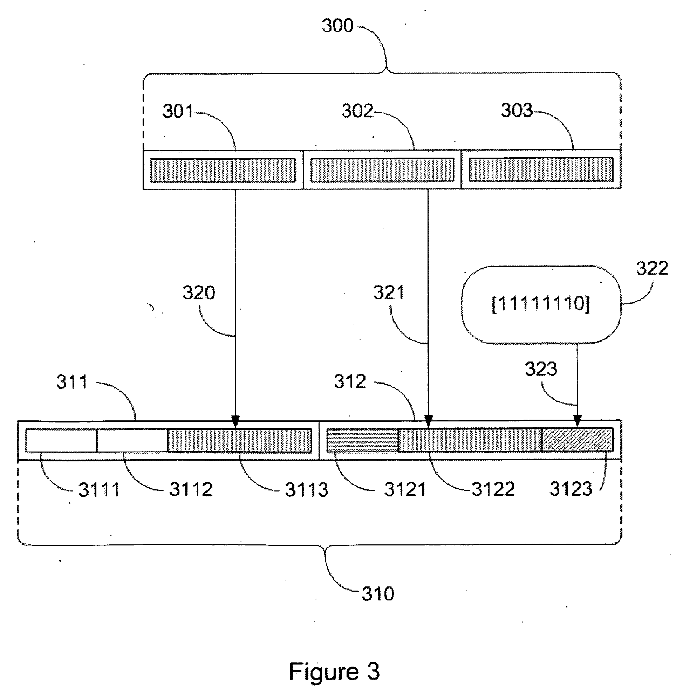

On présente, en relation avec les figures 2 et 3, un mode de réalisation particulier du procédé de translation d'adresse des services diffusés DVB appliqué au réseau IP en version 4.

Dans sa version 4, le protocole IP défini en entête de datagramme un champ d'adresse source et un champ d'adresse destination. Ces deux champs mesurent respectivement 4 Octets (32 bits).

### 6.2.1 Distribution d'un service DVB

La figure 2 présente le cas d'une distribution d'un unique service DVB à l'aide d'une adresse IPv4 « multicast ». Pour créer une adresse IPv4 « multicast » unique, la passerelle 20 :
- Utilise (220) le champ « adresse IP source » 211 du datagramme 210 pour identifier l'opérateur de multiplexes « ONiD » 201. Les deux octets de poids faibles 2113 prennent alors pour valeur le champ « ONiD » du multiplexe. Les deux octets de poids forts 2111, 2112 sont laissés libres ;
- Utilise le champ « adresse IP destination » 212 du datagramme 210 pour identifier le service DVB. Ce champ est l'adresse IP multicast (de classe D) de diffusion du service DVB. La méthode de calcul de cette adresse est la suivante :
   - Le premier octet (poids fort) 2121 indique que le service transporté est de type DVB en y insérant une valeur spécifique à DVB ;
   - Les deuxième et troisième octets 2122 indiquent le multiplex d'origine du service. Ces deux octets prennent (221) alors la valeur du champ TSiD 202 du multiplexe d'origine ;
   - Le dernier octet 2123 identifie le service d'origine. Cependant, une renumérotation 222 des « Services ID » 203 DVB, composés au départ de 16 bits, est nécessaire afin de coder l'information sur 8 bits. La méthode de renumérotation 222 est définie comme suit :
      - Classement des « Services ID » d'un multiplexe par ordre croissant ;
      - Allocation croissante d'un identifiant à chaque service en partant de la valeur 1 jusqu'à 253 (incrémentation par pas de 1). La valeur 254 est réservée pour signaler que l'on n'adresse pas au niveau service. Le champ DVB SiD est alors ignoré. On n'adresse dans ce cas qu'au niveau multiplexe (c.f. 6.2.2) ;
      - La valeur est ensuite insérée (223) dans le dernier octet 2123.

Dans un mode de réalisation alternatif, l'adresse IP de destination peut être composée des deux champs « TSiD » et « SiD » sans qu'il soit nécessaire d'effectuer une renumérotation de ce dernier. En effet, il est possible d'affecter l'indication de service transporté au niveau de l'adresse source du datagramme IP.

Encore dans un autre mode de réalisation, il est possible de renuméroter l'ensemble des identifiants « ONiD », « TSiD » et « SiD » selon un processus similaire à celui décrit plus haut afin de ne remplir que l'adresse de destination du datagramme IP et d'insérer dans l'adresse source de ce même datagramme l'adresse de la passerelle qui effectue la translation d'adresse.

### 6.2.2 Distribution de l'ensemble des services d'un multiplexe DVB

La figure 3 présente le cas d'une distribution d'un multiplexe DVB, contenant plusieurs services DVB à l'aide d'une adresse IPv4 « multicast ». Pour créer une adresse IPv4 « multicast » unique, la passerelle 30 :
- Utilise (320) le champ « adresse IP source » 311 du datagramme 310 pour identifier l'opérateur de multiplexes « ONiD » 301. Les deux octets de poids faibles 3113 prennent (320) alors pour valeur le champ « ONiD » du multiplexe. Les deux octets 3111, 3112 de poids forts sont laissés libres ;
- Utilise le champ « adresse IP destination » 312 du datagramme 310 pour identifier les services DVB. Ce champ est l'adresse IP multicast (de classe D) de diffusion des services DVB. La méthode de calcul de cette adresse est la suivante :
   - Le premier octet (poids fort) 3121 indique que le service transporté est de type DVB en y insérant une valeur spécifique à DVB ;
   - Les deuxième et troisième 3122 octets indiquent le multiplex d'origine du service. Ces deux octets prennent (321) la valeur du champ « TSiD » 302 du multiplexe d'origine. ;
   - Le dernier octet 3123 signale que l'on n'adresse pas au niveau service, mais pour l'ensemble du multiplexe. Il prend (323) pour valeur 254 en décimal [11111110] (322).

Dans ce cas de figure, l'identifiant du service 303 n'est pas utilisé pour constituer l'adresse destination du datagramme 310.

### 6.3 Description d'un mode de réalisation avec le protocole IPv6

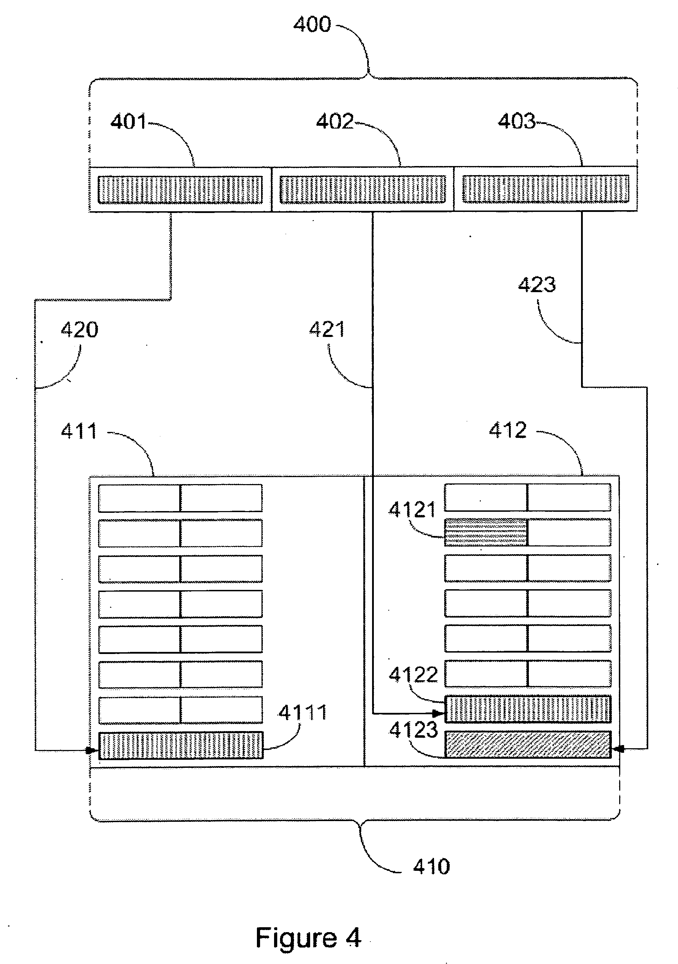

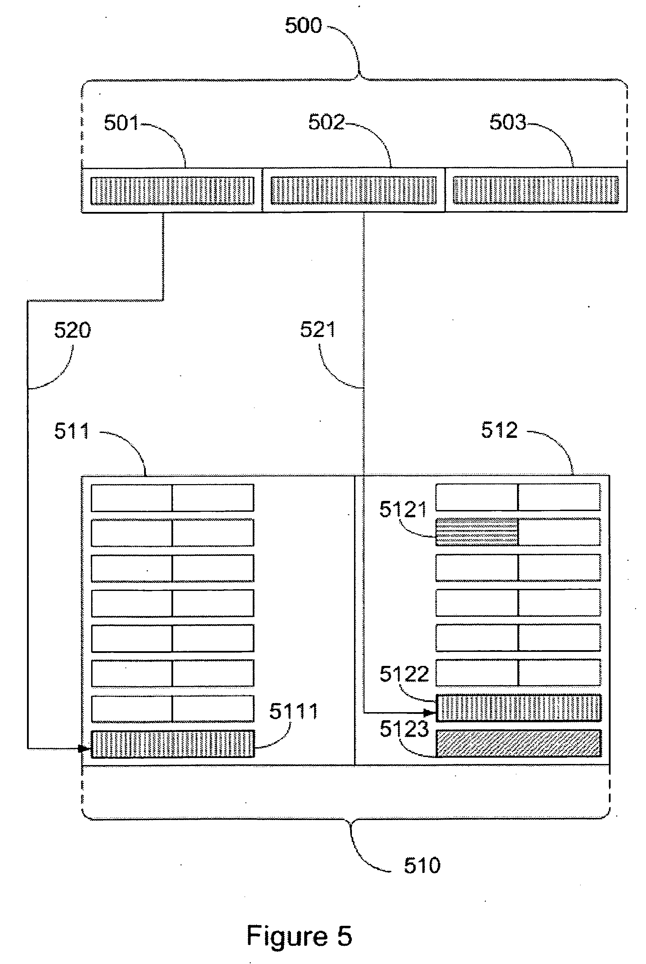

On présente, en relation avec les figures 4 et 5, un mode de réalisation particulier du procédé de translation d'adresse des services diffusés DVB appliqué au réseau IP en version 6.

Dans sa version 6, le protocole IP défini en entête de datagramme un champ d'adresse source et un champ d'adresse destination. Ces deux champs mesurent respectivement 16 Octets (128 bits).

### 6.3.1 Distribution d'un service DVB

La figure 4 présente le cas d'une distribution d'un unique service DVB à l'aide d'une adresse IPv6 « multicast ». Pour créer une adresse IPv6 « multicast » unique, la passerelle 40 :
- Utilise (420) le champ « adresse IP source » 411 du datagramme 410 pour identifier l'opérateur de multiplexes « ONiD ». Les deux octets de poids faibles 4111 prennent (420) alors pour valeur le champ « ONiD » du multiplexe. Cette première étape permet de générer l'adresse source du datagramme: Dans un autre mode de réalisation, compte tenu du format de l'adresse (16 octets), l'adresse source peut contenir d'autres informations telles que l'indication permettant de définir qu'il s'agit d'une adresse de fournisseur de service ;
- Utilise le champ « adresse IP destination » 412 du datagramme 410 pour identifier le multiplex DVB. Les informations insérées dans ce champ constituent l'adresse IP « multicast » de diffusion du service DVB. Dans une adresse « multicast » du protocole IPv6, les 16 bits de poids forts sont réservés et ne peuvent donc pas être utilisés. La méthode de calcul des 112 bits restant de cette adresse est la suivante :
   - Le troisième octet 4121 indique que le service transporté est bien de type DVB, en réservant une valeur spécifique à DVB ;
   - Les 9 octets (72 bits) suivants sont inutilisés.
   - Les 4 octets restants (de poids faibles) sont constitués 421, 423 respectivement de la valeur du « TSiD » 402 et « SiD » 403.

### 6.3.2 Distribution d'un multiplexe DVB

La figure 5 présente le cas d'une distribution d'un unique service DVB à l'aide d'une adresse IPv6 « multicast ». Pour créer une adresse IPv6 « multicast » unique, la passerelle 50 :
- Utilise (520) le champ « adresse IP source » 511 du datagramme 510 pour identifier l'opérateur de multiplexes « ONiD ». Les deux octets de poids faibles 5111 prennent (520) alors pour valeur le champ « ONiD » du multiplexe. Cette première étape permet de générer l'adresse source du datagramme. Dans un autre mode de réalisation, compte tenu du format de l'adresse (16 octets), l'adresse source peut contenir d'autres informations telles que l'indication permettant de définir qu'il s'agit d'une adresse de fournisseur de service ;
- Utilise le champ « adresse IP destination » 512 du datagramme 5 10 pour identifier le multiplex DVB. Les informations insérées dans ce champ constituent l'adresse IP « multicast » de diffusion du service DVB. Dans une adresse « multicast » du protocole IPv6, les 16 bits de poids forts sont réservés et ne peuvent donc pas être utilisés. La méthode de calcul des 112 bits restant de cette adresse est la suivante :
   - Le troisième octet 5121 indique que le service transporté est bien de type DVB, en réservant une valeur spécifique à DVB ;
   - Les 9 octets (72 bits) suivants sont inutilisés.
   - Les 2 octets 5122 suivants seront constitués (521) de la valeur du « TSiD » 502.
   - Enfin les deux derniers octets 5123 signalent que l'on n'adresse pas au niveau service. Ils prennent pour valeur 65534 en décimal.

Dans ce cas de figure, l'identifiant du service 503 n'est pas utilisé pour constituer l'adresse destination du datagramme 510.

## Revendications

1. Procédé de transformation d'une première adresse de niveau transport en une seconde adresse de niveau transport :
- ladite première adresse représentant au moins un service de diffusion de données numériques (111, 112, 113) en provenance d'au moins un réseau de diffusion non maillé (10) et comprenant des données identifiant ledit au moins un service de diffusion de données numériques ;
- ladite seconde adresse comprenant un champ source (1411) et/ou un champ destination (1412) et utilisée dans des datagrammes à destination d'au moins un réseau de communication ;
- **caractérisé en ce qu'**il met en oeuvre les étapes suivantes :
- récupération desdites données identifiant ledit au moins un service de diffusion de données numériques (1411, 1412, 1413) ;
- insertion (1431, 1432, 1433) d'au moins une partie desdites données identifiantes dans ladite seconde adresse desdits datagrammes.

2. Procédé de transformation selon la revendication 1, **caractérisé en ce que** ledit réseau de télécommunication est un réseau basé sur le protocole IP.

3. Procédé de transformation selon l'une quelconque des revendications 1 et 2, **caractérisé en ce que** lesdites données identifiantes appartiennent au groupe comprenant au moins :
- un identifiant dudit réseau de diffusion d'origine ;
- un identifiant de flux de transport ;
- un identifiant dudit au moins un service de diffusion de données numériques .

4. Procédé de transformation selon l'une quelconque des revendications 1 à 3, **caractérisé en ce que** ladite insertion desdites données identifiantes est mise en oeuvre dans au moins un desdits champs composant ladite seconde adresse de niveau transport.

5. Procédé de transformation selon l'une quelconque des revendications 1 à 4 **caractérisé en ce que** :
- ledit au moins un réseau de diffusion non maillé véhicule des données de type « DVB » ;
- ledit identifiant dudit réseau de diffusion d'origine est le champ « ONiD » d'un multiplexe « DVB » ;
- ledit identifiant de flux de transport est le champ « TSiD » dudit multiplexe « DVB » ;
- ledit identifiant dudit au moins un service de diffusion de données numériques est le champ « SiD » d'un service de diffusion numérique dudit multiplexe « DVB ».

6. Procédé de transformation selon l'une quelconque des revendications 4 et 5, **caractérisé en ce que**, lorsque ladite seconde adresse est de type IPv4, ladite insertion desdites données identifiantes est accomplie comme suit :
- les deux octets de poids faible dudit champs source prennent la valeur dudit identifiant du réseau d'origine « ONiD » ;
- le premier octet dudit champs destination prend une valeur constante et caractéristique de l'émission des services de diffusion numérique « DVB » ;
- les seconds et troisièmes octets dudit champs destination prennent la valeur dudit identifiant de flux de transport « TSiD » ;
- le quatrième octet dudit champs destination prend une valeur représentative dudit identifiant de service.

7. Procédé selon la revendication 6 **caractérisé en ce que** ladite valeur représentative dudit identifiant de service est déterminée de la manière suivante :
- [11111110] dans le cas d'une distribution de l'ensemble desdits au moins un service de diffusion numérique « DVB » ;
- une valeur binaire issue d'une renumérotation dudit identifiant du service « SiD » sur 8 bits et comprise entre [00000000] et [11111101] dans le cas d'une distribution d'un seul desdits au moins un service de diffusion numérique « DVB ».

8. Procédé selon la revendication 7 **caractérisé en ce que** ladite renumérotation dudit identifiant du service « SiD » sur 8 bits comprend les étapes suivantes :
- comptage d'un ensemble desdits au moins un service de diffusion numérique « DVB » identifiés par ledit identifiant du réseau d'origine « ONiD » et ledit identifiant de flux de transport « TSiD » ;
- allocation d'une valeur binaire croissante à chaque élément dudit ensemble.

9. Procédé de transformation selon l'une quelconque des revendications 4 et 5, **caractérisé en ce que**, lorsque ladite seconde adresse est de type IPv6, ladite insertion desdites données identifiantes est accomplie comme suit :
- les deux octets de poids faible dudit champs source prennent la valeur dudit identifiant du réseau d'origine « ONiD » ;
- le troisième octet dudit champs destination prend une valeur constante et caractéristique de l'émission des services de diffusion numérique « DVB » ;
- les treizième et quatorzième octets dudit champs destination prennent la valeur dudit identifiant de flux de transport « TSiD » ;
- les quinzième et seizième octets dudit champs destination prennent une valeur représentative dudit identifiant de service.

10. Procédé selon la revendication 9 **caractérisé en ce que** ladite valeur représentative dudit identifiant de service est déterminée de la manière suivante :
- [11111111][11111101] dans le cas d'une distribution de l'ensemble desdits au moins un service de diffusion numérique « DVB » ;
- la valeur dudit identifiant du service « SiD » dans le cas d'une distribution d'un seul desdits au moins un service de diffusion numérique « DVB ».

11. Passerelle comprenant des moyens de transformation d'une première adresse de niveau transport en une seconde adresse de niveau transport,
- ladite première adresse représentant au moins un service de diffusion de données numériques en provenance d'au moins un réseau de diffusion non maillé et comprenant des données identifiant ledit au moins un service de diffusion de données numériques ;
- ladite seconde adresse comprenant un champ source et/ou un champ destination et utilisée dans des datagrammes à destination d'au moins un réseau de communication ;
- **caractérisé en ce qu'**elle comprend :
- des moyens de récupération desdites données identifiant ledit au moins un service de diffusion de données numériques ;
- des moyens d'insertion d'au moins une partie desdites données identifiantes dans ladite seconde adresse desdits datagrammes.

12. Produit programme d'ordinateur téléchargeable depuis un réseau de communication et/ou stocké sur un support lisible par ordinateur et/ou exécutable par un microprocesseur,
**caractérisé en ce qu'**il comprend des instructions d code de programme pour la mise en oeuvre des étapes du procédé de transformation d'une première adresse de niveau transport en une seconde adresse de niveau transport, selon la revendication 1.

## Claims

1. Method for converting a first transport level address into a second transport level address:
- said first address representing at least one service for broadcasting digital data (111, 112, 113) from at least one non-meshed broadcasting network (10) and comprising data identifying said at least one digital data broadcasting service;
- said second address comprising a source field (1411) and/or a destination field (1412) and used in datagrams intended for at least one communication network;
- **characterized in that** it implements the following steps:
- recovery of said data identifying said at least one digital data broadcasting service (1411, 1412, 1413);
- insertion (1431, 1432, 1433) of at least a portion of said identifying data into said second address of said datagrams.

2. Conversion method according to Claim 1, **characterized in that** said telecommunication network is a network based on the IP protocol.

3. Conversion method according to either of Claims 1 and 2, **characterized in that** said identifying data belong to the group comprising at least
- an identifier of said origin broadcasting network;
- a transport stream identifier;
- an identifier of said at least one digital data broadcasting service.

4. Conversion method according to any one of Claims 1 to 3, **characterized in that** said insertion of said identifying data is implemented in at least one of said fields making up said second transport level address.

5. Conversion method according to any one of Claims 1 to 4, **characterized in that**
- said at least one non-meshed broadcasting network conveys data of "DVB" type;
- said identifier of said origin broadcasting network is the "ONiD" field of a "DVB" multiplex;
- said transport stream identifier is the "TSiD" field of said "DVB" multiplex;
- said identifier of said at least one digital data broadcasting service is the "SiD" field of a digital broadcasting service of said "DVB" multiplex.

6. Conversion method according to any one of Claims 4 and 5, **characterized in that**, when said second address is of IPv4 type, said insertion of said identifying data is accomplished as follows:
- the two lowest order bytes of said source field take the value of said origin network identifier "ONiD";
- the first byte of said destination field takes a constant value characteristic of the transmission of the "DVB" digital broadcasting services;
- the second and third bytes of said destination field take the value of said transport stream identifier "TSiD";
- the fourth byte of said destination field takes a value representative of said service identifier.

7. Method according to Claim 6, **characterized in that** said value representative of said service identifier is determined as follows:
- [11111110] in the case of a distribution of all of said at least one "DVB" digital broadcasting service;
- a binary value derived from a renumbering of said service identifier "SiD" on 8 bits and included between [00000000] and [11111101] in the case of a distribution of just one of said at least one "DVB" digital broadcasting service.

8. Method according to Claim 7, **characterized in that** said renumbering of said service identifier "SiD" on 8 bits comprises the following steps:
- counting of a set of said at least one "DVB" digital broadcasting service identified by said origin network identifier "ONiD" and said transport stream identifier "TSiD";
- allocation of an increasing binary value to each element of said set.

9. Conversion method according to any one of Claims 4 and 5, **characterized in that**, when said second address is of IPv6 type, said insertion of said identifying data is accomplished as follows:
- the two lowest order bytes of said source field take the value of said origin network identifier "ONiD";
- the third byte of said destination field takes a constant value characteristic of the transmission of the "DVB" digital broadcasting services;
- the thirteenth and fourteenth bytes of said destination field take the value of said transport stream identifier "TSiD";
- the fifteenth and sixteenth bytes of said destination field take a value representative of said service identifier.

10. Method according to Claim 9, **characterized in that** said value representative of said service identifier is determined as follows:
- [11111111][11111101] in the case of a distribution of all of said at least one "DVB" digital broadcasting service;
- the value of said service identifier "SiD" in the case of a distribution of just one of said at least one "DVB" digital broadcasting service.

11. Gateway comprising means for converting a first transport level address into a second transport level address,
- said first address representing at least one service for broadcasting digital data from at least one non-meshed broadcasting network and comprising data identifying said at least one digital data broadcasting service;
- said second address comprising a source field and/or a destination field and used in datagrams intended for at least one communication network;
- **characterized in that** it comprises:
- means for recovering said data identifying said at least one digital data broadcasting service;
- means for inserting at least a portion of said identifying data into said second address of said datagrams.

12. Computer program product that can be downloaded from a communication network and/or stored on a computer-readable medium and/or executable by a microprocessor,
**characterized in that** it comprises program code instructions for implementing the steps of the method for converting a first transport level address into a second transport level address, according to Claim 1.

## Patentansprüche

1. Verfahren zur Umwandlung einer ersten Transportebenenadressse in eine zweite Transportebenenadressse:
- wobei die erste Adresse mindestens einen Verbreitungsdienst digitaler Daten (111, 112, 113) darstellt, die von mindestens einem nicht vermaschten Verbreitungsnetz (10) kommen, und Daten enthält, die den mindestens einen Verbreitungsdienst digitaler Daten kennzeichnen;
- wobei die zweite Adresse ein Quellfeld (1411) und/oder ein Zielfeld (1412) enthält und in Datagrammen verwendet wird, die für mindestens ein Kommunikationsnetz bestimmt sind;
**dadurch gekennzeichnet, dass** es die folgenden Schritte durchführt:
- Wiedergewinnung der den mindestens einen Verbreitungsdienst digitaler Daten (1411, 1412, 1413) kennzeichnenden Daten;
- Einfügung (1431, 1432, 1433) mindestens eines Teils der Kennzeichnungsdaten in die zweite Adresse der Datagramme.

2. Umwandlungsverfahren nach Anspruch 1, **dadurch gekennzeichnet, dass** das Telekommunikationsnetz ein Netz auf der Basis des IP-Protokolls ist.

3. Umwandlungsverfahren nach einem der Ansprüche 1 und 2, **dadurch gekennzeichnet, dass** die die Kennzeichnungsdaten zu der Gruppe gehören, die mindestens enthält:
- eine Kennung des Ausgangsverbreitungsnetzes;
- eine Transportstromkennung;
- eine Kennung des mindestens einen Verbreitungsdiensts digitaler Daten.

4. Umwandlungsverfahren nach einem der Ansprüche 1 bis 3, **dadurch gekennzeichnet, dass** die Einfügung der Kennzeichnungsdaten in mindestens einem der Felder durchgeführt wird, die die zweite Transportebenenadressse bilden.

5. Umwandlungsverfahren nach einem der Ansprüche 1 bis 4, **dadurch gekennzeichnet, dass**:
- das mindestens eine nicht vermaschte Verbreitungsnetz Daten vom Typ «DVB» übermittelt;
- die Kennung des Ausgangsverbreitungsnetzes das Feld «ONiD» eines Multiplex «DVB» ist;
- die Transportstromkennung das Feld «TSiD» des Multiplex «DVB» ist;
- die Kennung des mindestens einen Verbreitungsdiensts digitaler Daten das Feld «SiD» eines digitalen Verbreitungsdiensts des Multiplex «DVB» ist.

6. Umwandlungsverfahren nach einem der Ansprüche 4 und 5, **dadurch gekennzeichnet, dass**, wenn die zweite Adresse vom Typ IPv4 ist, die Einfügung der Kennzeichnungsdaten wie folgt ausgeführt wird:
- die zwei Bytes geringer Gewichtung des Quellfelds nehmen den Wert der Kennung des Ausgangsnetzes «ONiD» an;
- das erste Byte des Zielfelds nimmt einen konstanten und für das Senden der digitalen Verbreitungsdienste «DVB» charakteristischen Wert an;
- die zweiten und dritten Bytes des Zielfelds nehmen den Wert der Transportstromkennung «TSiD» an;
- das vierte Byte des Zielfelds nimmt einen für die Dienstkennung repräsentativen Wert an.

7. Verfahren nach Anspruch 6, **dadurch gekennzeichnet, dass** der für die Dienstkennung repräsentative Wert folgendermaßen bestimmt wird:
- [11111110] im Fall einer Ausgabe der Gesamtheit der mindestens einen digitalen Verbreitungsdienste «DVB»;
- einen binären Wert, der von einer Umnummerierung der Kennung des Diensts «SiD» auf 8 Bits stammt und zwischen [00000000] und [11111101] im Fall einer Ausgabe eines einzigen der mindestens einen digitalen Verbreitungsdienste «DVB» liegt.

8. Verfahren nach Anspruch 7, **dadurch gekennzeichnet, dass** die Umnummerierung der Kennung des Diensts «SiD» auf 8 Bits die folgenden Schritte enthält:
- Zählen einer Einheit der mindestens einen digitalen Verbreitungsdienste «DVB», die von der Kennung des Ausgangsnetzes «ONiD» und der Transportstromkennung «TSiD» gekennzeichnet werden;
- Zuweisung eines steigenden Binärwerts an jedes Element der Einheit.

9. Umwandlungsverfahren nach einem der Ansprüche 4 und 5, **dadurch gekennzeichnet, dass**, wenn die zweite Adresse vom Typ IPv6 ist, die Einfügung der Kennzeichnungsdaten wie folgt ausgeführt wird:
- die zwei Bytes geringer Gewichtung des Quellfelds nehmen den Wert der Kennung des Ausgangsnetzes «ONiD» an;
- das dritte Byte des Zielfelds nimmt einen konstanten und für das Senden der digitalen Verbreitungsdienste «DVB» charakteristischen Wert an;
- das dreizehnte und das vierzehnte Byte des Zielfelds nehmen den Wert der Transportstromkennung «TSiD» an;
- das fünfzehnte und das sechzehnte Byte des Zielfelds nehmen einen für die Dienstkennung repräsentativen Wert an.

10. Verfahren nach Anspruch 9, **dadurch gekennzeichnet, dass** der für die Dienstkennung repräsentative Wert folgendermaßen bestimmt wird:
- [11111111][11111101] im Fall einer Ausgabe der Einheit der mindestens einen digitalen Verbreitungsdienste «DVB» ;
- der Wert der Kennung des Diensts «SiD» im Fall einer Ausgabe eines einzigen der mindestens einen digitalen Verbreitungsdienste «DVB».

11. Gateway, das Einrichtungen zur Umwandlung einer ersten Transportebenenadressse in eine zweite Transportebenenadressse enthält,
- wobei die erste Adresse mindestens einen Verbreitungsdienst digitaler Daten darstellt, die von mindestens einem nicht vermaschten Verbreitungsnetz kommen, und Daten enthält, die den mindestens einen Verbreitungsdienst digitaler Daten kennzeichnen;
- wobei die zweite Adresse ein Quellfeld und/oder ein Zielfeld enthält und in Datagrammen verwendet wird, die für mindestens ein Kommunikationsnetz bestimmt sind;
**dadurch gekennzeichnet, dass** es enthält:
- Einrichtungen zur Wiedergewinnung der Daten, die den mindestens einen Verbreitungsdienst digitaler Daten kennzeichnen;
- Einrichtungen zur Einfügung mindestens eines Teils der Kennzeichnungsdaten in die zweite Adresse der Datagramme.

12. Computerprogrammprodukt, das von einem Kommunikationsnetz heruntergeladen und/oder auf einem computerlesbaren Träger gespeichert und/oder von einem Mikroprozessor ausgeführt werden kann, **dadurch gekennzeichnet, dass** es Programmcodeanweisungen zur Durchführung der Schritte des Verfahrens zur Umwandlung einer ersten Transportebenenadressse in eine zweite Transportebenenadressse nach Anspruch 1 enthält.
